Europäisches Patentamt

European Patent Office

Office européen des brevets

(19)

(11) **EP 0 925 641 B1**

(12) **FASCICULE DE BREVET EUROPEEN**

(45) Date de publication et mention
de la délivrance du brevet:
**09.01.2002 Bulletin 2002/02**

(21) Numéro de dépôt: **97940208.8**

(22) Date de dépôt: **10.09.1997**

(51) Int Cl.⁷: **H02P 6/18**

(86) Numéro de dépôt international:
**PCT/FR97/01593**

(87) Numéro de publication internationale:
**WO 98/11662 (19.03.1998 Gazette 1998/11)**

(54) **DISPOSITIF DE DETECTION DE LA POSITION ANGULAIRE POUR LE PILOTAGE D'UN MOTEUR SYNCHRONE A EXCITATION PAR AIMANT PERMANENT**

VORRICHTUNG ZUR ERKENNUNG DER WINKELPOSITION FÜR DIE LAGEREGELUNG EINES SYNCHRONMOTORS MIT PERMANENT-MAGNET-ERREGUNG

DEVICE FOR SENSING THE ANGULAR POSITION FOR CONTROLLING A SYNCHRONOUS MOTOR EXCITED BY A PERMANENT MAGNET

(84) Etats contractants désignés:
**CH DE GB IT LI SE**

(30) Priorité: **10.09.1996 FR 9611015**

(43) Date de publication de la demande:
**30.06.1999 Bulletin 1999/26**

(73) Titulaire: **SOCIETE DE MECANIQUE MAGNETIQUE**
**F-27950 Saint-Marcel (FR)**

(72) Inventeur: **SCHROEDER, Ulrich**
**F-76130 Mont Saint Aignan (FR)**

(74) Mandataire: **Thévenet, Jean-Bruno et al**
**Cabinet Beau de Loménie 158, rue de l'Université**
**75340 Paris Cédex 07 (FR)**

(56) Documents cités:
**EP-A- 0 481 933**     **US-A- 4 764 711**
**US-A- 5 140 243**     **US-A- 5 233 275**
**US-A- 5 367 234**

EP 0 925 641 B1

## Description

La présente invention a pour objet un dispositif de détection de la position angulaire pour le pilotage d'un moteur synchrone à excitation par aimant permanent comportant un rotor sans cage d'amortissement, un stator muni d'un ensemble de bobinages, un convertisseur de fréquence et des circuits de contrôle du convertisseur de fréquence.

Le moteur synchrone avec une excitation à aimant permanent est de plus en plus utilisé dans des applications grande vitesse qui demandent entre autres une grande puissance volumique et des faibles pertes au rotor, telles que des pompes turbomoléculaires, des broches à grande vitesse ou des compresseurs d'air.

La variation de vitesse du moteur synchrone avec une excitation à aimant permanent nécessite en général un convertisseur de fréquence (onduleur). Le convertisseur applique des courants, variables en amplitude et en fréquence, au bobinage du moteur. Le pilotage est normalement réalisé en "boucle fermée" : un capteur de position angulaire fournit l'information de la position réelle du rotor au convertisseur qui applique ensuite des courants orientés en phase et en amplitude au stator du moteur. Ainsi le moteur est forcé de tourner de manière synchrone et une cage d'amortissement (qui induirait des pertes rotoriques supplémentaires) n'est pas nécessaire.

La régulation en vitesse se fait généralement à l'aide de deux boucles d'asservissement en cascade : une boucle de courant interne asservit l'amplitude et la phase des courants -qui sont ainsi proportionnelles au couple du moteur- et une deuxième boucle asservit la vitesse de rotation. La sortie du régulateur de vitesse est la consigne du régulateur de courant.

L'étage de puissance du convertisseur est généralement constitué d'un pont de six interrupteurs électroniques alimentés par une source de tension continue et commandés en tout ou rien à fréquence élevée en utilisant la technique de modulation en largeur d'impulsion.

La commande d'ensembles convertisseur-moteur du type précité implique l'utilisation de capteurs à effet Hall, de capteurs inductifs, de resolvers ou de capteurs optiques (absolus ou incrémentaux).

Le document US A 4 764 711 décrit un système de commande d'un moteur à courant continu sans balais, qui fournit un signal de vitesse de rotation et un signal de position de moteur et met en oeuvre des moyens de mesure du courant et de la tension pour un enroulement du moteur.

La présente invention vise à supprimer la nécessité d'utiliser un ou plusieurs détecteurs de position angulaire, et notamment vise à éviter l'utilisation de capteurs actifs à effet Hall, qui fournissent un signal tout ou rien et fonctionnent en statique, mais restent fragiles et manquent de fiabilité tout en posant des problèmes de tenue aux radiations, ou de capteurs inductifs du type "top tour", qui fournissent une impulsion par tour, mais imposent un ajustage de la position angulaire qui peut être difficile et coûteux dans la pratique dès lors qu'un contrôle ne peut être fait qu'en rotation.

La présente invention vise ainsi à permettre de disposer d'une information de position angulaire analogue à celle qui pourrait être obtenue à l'aide d'un capteur inductif de type "top tour" ou encore à l'aide d'un capteur à effet Hall, sans mettre en oeuvre de tels capteurs.

Selon l'invention, ces buts sont atteints grâce à un dispositif de détection de la position angulaire pour le pilotage d'un moteur synchrone à excitation par aimant permanent comportant un rotor sans cage d'amortissement, un stator muni d'un ensemble de bobinages, un convertisseur de fréquence et des circuits de contrôle du convertisseur de fréquence, caractérisé en ce que le dispositif comprend un circuit de calcul comportant des moyens de mesure pour déterminer la tension $V_u$ d'une phase donnée U, des moyens pour prélever au niveau de la sortie du convertisseur ou aux bornes du stator du moteur une information concernant l'intensité $i_u$ du courant dans le bobinage considéré, des premiers moyens soustracteurs pour déduire de la tension $V_u$ déterminée par lesdits moyens de mesure une grandeur correspondant à la chute de tension résistive sur la résistance du bobinage considéré parcouru par un courant $i_u$, des moyens d'intégration pour intégrer le signal issu des premiers moyens soustracteurs, des seconds moyens soustracteurs pour déduire du signal issu des moyens d'intégration une grandeur correspondant à la chute de tension inductive sur l'inductance du bobinage considéré parcouru par le courant $i_u$, et un circuit comparateur pour détecter les passages à zéro du signal sinusoïdal de flux rotorique issu des seconds moyens soustracteurs et fournir ainsi un signal d'information repérant la position angulaire du rotor par rapport au stator.

Le circuit de calcul est réalisé essentiellement à l'aide d'un petit nombre d'amplificateurs opérationnels.

Selon l'invention, la position angulaire du rotor est ainsi identifiée en utilisant uniquement les informations de tension et de courant toujours disponibles en sortie du convertisseur ou aux bornes du moteur lui-même, et sans qu'il soit nécessaire de mettre en oeuvre des capteurs spécifiques de détection de position angulaire.

Le circuit de calcul permet de fournir une pluralité de signaux de sortie déphasés de 120 degrés.

Le circuit de calcul permet d'obtenir un signal de flux rotorique qui est l'image du flux généré par les aimants du rotor et présente une phase et une amplitude qui ne sont pas perturbées par l'action du convertisseur.

L'invention concerne également un dispositif de pilotage d'un moteur synchrone à excitation par aimant permanent, et un dispositif d'entraînement d'un ensemble tournant monté sur des paliers magnétiques actifs, tels que définis dans les revendications annexées.

D'autres caractéristiques et avantages de l'invention ressortiront de la description suivante de modes particuliers de réalisation donnés à titre d'exemples en référence aux dessins annexés, sur lesquels :

- la Figure 1 est une vue schématique d'ensemble des principaux composants d'un moteur synchrone à excitation à aimant permanent auquel est appliqué le dispositif de détection selon l'invention ;
- la Figure 2 représente le schéma équivalent d'une phase (la phase U) du moteur de la Figure 1 ;
- les Figures 3 et 4 sont deux schémas-blocs de circuits permettant d'obtenir un signal de flux d'excitation rotorique à partir des informations de tension et de courant disponibles aux bornes du moteur de la Figure 1 ;
- la Figure 5 est un schéma-bloc montrant l'ensemble des circuits constitutifs d'un circuit de calcul d'un dispositif de détection selon l'invention ;
- la Figure 6 représente le signal de flux obtenu avec un dispositif de détection selon l'invention dans le cas d'un moteur en état d'attente, avec un courant moteur nul ;
- la Figure 7 représente le signal de flux obtenu avec un dispositif de détection selon l'invention dans le cas d'un moteur présentant un courant moteur d'intensité maximale ;
- la Figure 8 représente le signal de flux obtenu avec un dispositif de détection selon l'invention dans le cas d'un moteur fonctionnant en générateur avec un courant moteur d'intensité maximale et de signe inverse de celui du courant du moteur correspondant à la Figure 7 ; et
- la Figure 9 représente un signal de position angulaire obtenu avec un dispositif impulsionnel de référence de vitesse.

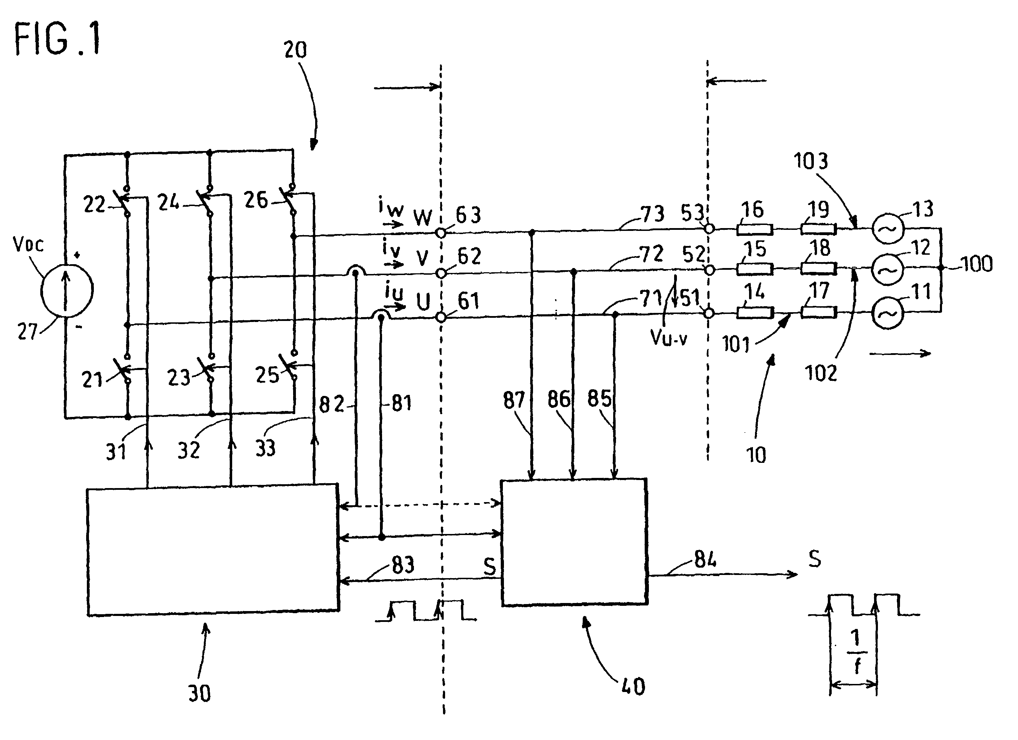

On voit sur la Figure 1 la représentation symbolique du stator 10 d'un moteur synchrone à excitation par aimant permanent, avec des bobinages 101,102,103 correspondant à des phases UVW qui sont connectées entre un point commun 100 et des bornes 51, 52, 53.

En fonctionnement, chaque bobinage 101, 102, 103 de chaque phase U V W peut être représenté par une force électromotrice 11,12,13 correspondant à la tension induite à vide, une résistance 14, 15, 16 et une inductance 17, 18, 19.

Les bornes 51, 52, 53 du stator 10 sont reliées par des liaisons 71, 72, 73 à des bornes 61, 62, 63 de sortie d'un convertisseur de fréquence 20 ou onduleur.

Le convertisseur de fréquence 20 est associé à un circuit 30 de contrôle du convertisseur. L'étage de puissance du convertisseur 20 comprend un pont de six interrupteurs électroniques 21 à 26 alimentés par une source 27 de tension continue $V_{DC}$. Les interrupteurs 21 à 26 sont commandés depuis le circuit 30 de contrôle à travers des fils de commande 31 à 33. La commande des interrupteurs est effectuée en tout ou rien à fréquence élevée, de l'ordre de 10 à 100 kHz, en utilisant la technique de modulation en largeur d'impulsion PWM ("pulse width modulation"). Il apparaît ainsi aux bornes du stator 10 du moteur des "blocs" de tension avec une amplitude égale à $+V_{DC}$ ou $-V_{DC}$.

Les courants statoriques $i_u$, $i_v$, $i_w$ peuvent faire l'objet d'une modulation sinusoïdale ou d'une modulation rectangulaire. La modulation sinusoïdale est plus compliquée au niveau du traitement du signal, mais contribue à améliorer les performances du moteur dans la mesure où l'échauffement rotorique est plus faible et la rotation de meilleure qualité. La modulation rectangulaire est plus simple à mettre en oeuvre et est notamment utilisée pour les moteurs de faible puissance (moteurs de type sans balai ou "brushless").

Traditionnellement, la combinaison d'un moteur synchrone à excitation par aimant permanent et d'un convertisseur utilise un ou plusieurs capteurs de position angulaire qui, selon l'application, peuvent être de type capteur à effet Hall, capteur inductif, resolver ou capteur optique.

Dans le cas des pompes turbomoléculaires et des compresseurs où l'on accepte des performances réduites à basse vitesse et où le couple à fournir au démarrage est faible, il est possible de faire démarrer le système en boucle ouverte. Dans ce cas, de façon traditionnelle, on utilise un capteur unique tel qu'un capteur inductif de type "top tour" qui fournit une impulsion par tour. Avec l'utilisation d'un tel capteur inductif, la commutation du pilotage en boucle ouverte au pilotage en boucle fermée doit être faite quand le signal du capteur est stable, c'est-à-dire en pratique pour des fréquences supérieures à environ 10 à 20 Hz.

Pour un pilotage optimal du moteur, la relation de phase du signal issu du capteur inductif par rapport aux pôles des aimants sur le rotor du moteur synchrone est très importante. L'ajustage de la position angulaire par rapport aux aimants est difficile à réaliser et s'avère coûteux. Le dispositif de détection selon l'invention, tel qu'illustré sur la Figure 1, permet d'éviter les inconvénients liés à l'utilisation d'un ou plusieurs détecteurs de position angulaire nécessitant des mises au point délicates.

Le dispositif de détection selon l'invention comprend essentiellement un circuit de calcul 40 qui reçoit, par des lignes 85, 86, 87, des informations de tension toujours disponibles sur les bornes 61, 62, 63 de sortie du convertisseur 20 ou sur les bornes d'entrée 51, 52, 53 du stator 10 du moteur.

De même, des informations $i_u$ $i_v$ concernant les courants dans les bobinages 101, 102 sont prélevées dans le convertisseur 20 par des lignes 81, 82 et sont appliquées à la fois au circuit de calcul 40 et au circuit 30 de contrôle du convertisseur.

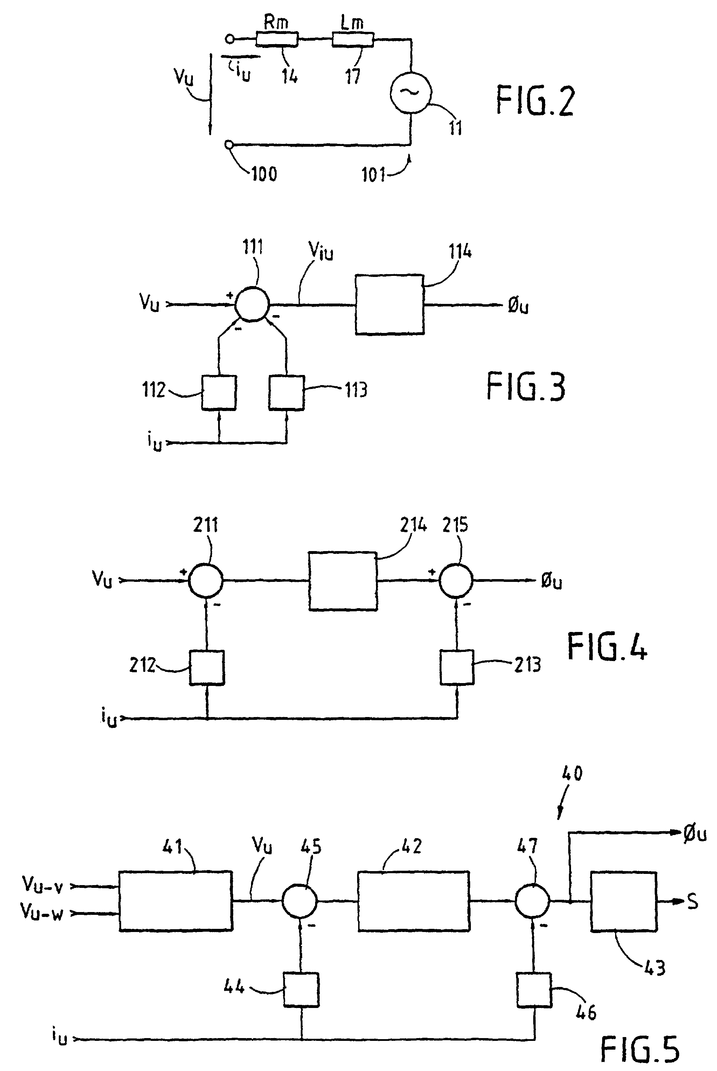

Comme on l'exposera plus loin en référence aux Figures 2 à 5, le circuit de calcul 40 peut délivrer, sans utiliser de capteur délicat à mettre en oeuvre, un signal au circuit 30 de contrôle du convertisseur par une ligne 83, ce signal comportant des fronts positifs indiquant la position angulaire du rotor par rapport au stator.

Le circuit de calcul 40 peut en outre fournir sur une ligne 84 un signal de vitesse fournissant une impulsion par tour pour commander un système de commande automatique de balourd associé à des paliers magnétiques actifs de support d'un ensemble tournant entraîné par le moteur synchrone. Dans le cas du signal de vitesse délivré sur la ligne 84, la relation de phase du signal appliqué au système de contrôle automatique de balourd par rapport à la position angulaire du rotor du moteur n'est pas importante, contrairement au cas du signal délivré sur la ligne 83 pour piloter le convertisseur 20 par le circuit de contrôle 30.

Quand on fait tourner un moteur synchrone à excitation permanente à vide, on peut mesurer à ses bornes une tension alternative, la tension induite à vide. L'amplitude de la tension induite à vide est proportionnelle à la vitesse de rotation et, dans le cas d'un moteur à deux pôles, sa fréquence correspond à la fréquence de rotation.

Une intégration de cette tension à l'aide d'un intégrateur électronique donne un signal de "flux rotorique" qui est l'image du flux généré par les aimants du rotor. L'amplitude de ce signal de flux est constante et sa phase contient l'information sur la position angulaire du rotor par rapport au stator.

Toutefois, ce signal de flux que l'on obtient en intégrant la tension aux bornes du moteur est fortement déformé quand le convertisseur applique des blocs de tension afin de faire passer du courant dans le bobinage. Deux flux magnétiques se superposent alors dans l'entrefer : le flux provenant des aimants et le flux généré par les courants dans le bobinage du stator.

Le circuit de calcul 40 qui permet l'élaboration d'un signal de flux rotorique compense l'effet perturbateur du flux généré par le bobinage et assure l'obtention d'un signal de flux dont la phase et l'amplitude ne sont pratiquement plus perturbées par l'action du convertisseur 20. Le signal de flux rotorique peut ainsi être utilisé de façon sûre pour l'élaboration des signaux de position angulaire ou de vitesse délivrés sur les lignes 83 et 84.

Un exemple de réalisation du circuit de calcul 40 sera décrit en référence aux Figures 2 à 5.

La Figure 2 montre le schéma équivalent d'un enroulement 101 correspondant à la phase U du moteur. La tension induite à vide $Vi_u$, symbolisée par la force électromotrice 11 est obtenue en soustrayant de la tension de phase mesurée $V_u$ le terme $(i_u * R_m)$ qui représente la chute de tension sur la résistance 14 du bobinage 101 et du câble associé, dont la valeur est $R_m$, et le terme $(L_m * \frac{di_u}{dt})$ qui représente la chute de tension sur l'inductance 17 du bobinage 101, dont la valeur est $L_m$. Le premier terme est proportionnel à la valeur $R_m$ de la résistance 14 et au courant $i_u$ mesuré dans la phase U et le deuxième terme est proportionnel à la valeur $L_m$ de l'inductance 17 et à la dérivée $\frac{di_u}{dt}$ du courant $i_u$ mesuré dans la phase U.

A partir du schéma équivalent de la Figure 2, on peut écrire les équations suivantes :

$$(1) \qquad Vi_u = V_u - R_m i_u - L_m \frac{di_u}{dt}$$

$$(2) \qquad \Phi_u = \frac{1}{T_i} \int Vi_u$$

où $\Phi_u$ représente le flux d'excitation rotorique obtenu après intégration de la tension induite à vide $Vi_u$ et $T_i$ est une constante.

La Figure 3 montre un exemple de schémabloc permettant d'élaborer, dans le circuit de calcul 40, le signal de flux d'excitation rotorique $\Phi_u$ à partir des informations de tension $V_u$ et de courant $i_u$ correspondant à la phase U et appliquées au circuit de calcul 40 par les lignes 85 et 81 (Figure 1).

Dans le schéma-bloc de la Figure 3, un soustracteur 111 reçoit le signal de tension $V_u$ auquel sont soustraits les termes $R_m * i_u$ et $L_m * \frac{di_u}{dt}$ élaborés dans des circuits 112 et 113 auxquels est appliqué le courant $i_u$.

Le signal $Vi_u$ issu du soustracteur 111 est intégré dans le circuit intégrateur 114 pour délivrer le signal de flux d'excitation $\Phi_u$.

Le schéma de la Figure 3 présente toutefois l'inconvénient d'impliquer la réalisation d'une dérivation au sein du circuit 113, ce qui complique la réalisation.

La Figure 4 montre le schéma-bloc d'une autre réalisation qui ne nécessite pas de dérivation.

Dans ce cas, le premier terme $C_1 = R_m * i_u$ est élaboré dans un circuit 212 pour être seul soustrait au signal de tension $V_u$ dans le soustracteur 211. Le signal de sortie du soustracteur 211 est soumis à une intégration dans le circuit intégrateur 214 et l'effet de la chute de tension inductive est compensé à la sortie du circuit intégrateur 214 par l'élaboration d'un deuxième terme $C_2 = \frac{L_m}{T_i} * i_u$ au sein d'un circuit 213 qui n'implique pas de dérivation, et le deuxième terme $C_2$ est simplement soustrait, par un deuxième soustracteur 215, du signal issu du circuit intégrateur 214.

Le schéma de la Figure 4 permet ainsi d'obtenir un signal de flux d'excitation $\Phi_u$ en procédant à des soustractions et à une intégration sans qu'il soit nécessaire en outre d'effectuer une dérivation toujours relativement difficile à réaliser en pratique.

La Figure 5 montre le schéma-bloc complet d'un exemple préférentiel de réalisation du circuit de calcul 40, selon les principes du schéma de la Figure 4.

Le circuit de calcul 40 comprend un premier circuit 41 qui détermine la tension de la phase U concernée à partir des tensions $V_{u-v}$ et $V_{u-w}$ qui peuvent être obtenues entre les fils 85 et 86 d'une part, et 85 et 87 d'autre part. La tension $V_u$ est ainsi égale au tiers de la somme des tensions $V_{u-v}$ et $V_{u-w}$. Le signal de tension $V_u$ issu du circuit 41 est appliqué à un premier soustracteur 45 qui procède à la soustraction de la chute de tension résistive dans le bobinage 101 (premier terme $C_1$ élaboré dans un circuit 44). Le signal issu du soustracteur 45 est intégré dans un circuit intégrateur 42. Le signal de sortie du circuit intégrateur 42 est lui-même appliqué à une entrée d'un deuxième soustracteur 47 qui soustrait un second terme $C_2$ élaboré dans un circuit 46 pour tenir compte de l'effet de la chute de tension inductive dans le bobinage 101. Le signal de flux rotorique $\Phi_u$ est ainsi obtenu en sortie du second soustracteur 47.

Les circuits 44 et 46 reçoivent l'information de courant $i_u$ appliquée au circuit de calcul 40 par la ligne 81.

Le signal de flux $\Phi_u$ est appliqué par ailleurs à un comparateur 43 qui détecte les passages à zéro de ce signal sinusoïdal $\Phi_u$. Les fronts positifs du signal tout ou rien en sortie du comparateur 43 contiennent la position angulaire du rotor par rapport au stator et constituent des signaux de position angulaire S délivrés sur les lignes 83 et 84 de la Figure 1.

Le circuit de calcul 40 peut être réalisé très simplement à partir d'un petit nombre d'amplificateurs opérationnels de faible coût. L'information concernant les courants $i_u$, $i_v$, $i_w$ est elle-même disponible dans le convertisseur 20 et l'information concernant les tensions $V_u$ $V_v$ $V_w$ des phases U V W peut être facilement obtenue à partir des signaux de tension disponibles aux bornes 51, 52, 53 du moteur.

Le circuit intégrateur 42 peut être constitué par un simple filtre du premier ordre avec une coupure d'environ 1 Hz. On évite ainsi tout problème de décalage de zéro.

Le circuit de calcul 40 peut aussi être intégré dans l'ensemble constitué par le convertisseur de fréquence 20 et son circuit de contrôle 30.

Le dispositif de détection selon l'invention comprend une connectique simplifiée, seuls trois fils de puissance 85, 86, 87 étant nécessaires pour fournir l'information de tension. L'absence de capteur du type capteur à effet Hall ou capteur inductif évite des problèmes d'ajustage et accroît la fiabilité. Dans le dispositif de détection selon l'invention, seul l'ordre des phases par rapport au sens de rotation est important.

Le dispositif de détection selon l'invention est applicable notamment à des moteurs synchrones avec une excitation à aimant permanent utilisés dans des applications à grande vitesse de rotation qui demandent entre autres une grande puissance volumique et des faibles pertes au rotor, telles que les pompes turbomoléculaires (300/800 W - 20.000/60.000 tr/mn), les broches porte-outil à grande vitesse (15/45 kW - 15.000/45.000 tr/mn), les compresseurs d'air (30/500 kW - 40.000/75.000 tr/mn).

Lorsque l'ensemble tournant entraîné par le moteur synchrone est monté sur des paliers magnétiques actifs, le dispositif de détection selon l'invention permet de fournir au système de contrôle automatique de balourd un signal de vitesse stable à partir de quelques hertz.

L'invention permet ainsi d'assurer, dès que la fréquence atteint quelques hertz, à la fois un pilotage en boucle fermée du convertisseur de fréquence 20 dont le pilotage a été effectué en boucle ouverte au démarrage, et une commande du système de contrôle automatique de balourd de la suspension magnétique active, en évitant pour ces deux fonctions tout emploi de capteurs indépendants inductifs ou similaires pour délivrer une information de position angulaire, et en conservant intactes les performances de l'ensemble convertisseur 20-moteur 10.

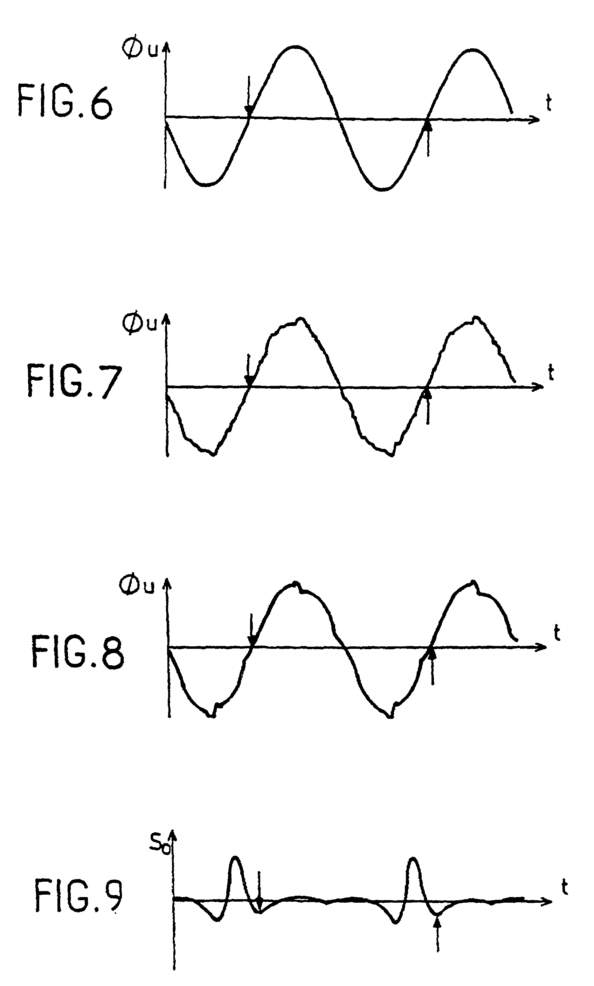

On a représenté sur les Figures 6, 7 et 8, pour un exemple de moteur ayant une vitesse de rotation de l'ordre de 24.000 tr/mn, la forme du signal de flux rotorique $\Phi_u$ obtenu par calcul à l'aide du dispositif selon l'invention, respectivement dans le cas où le moteur est dans un état d'attente ("stand by") avec un courant de moteur nul, dans le cas où le moteur fonctionne avec un courant de moteur maximum et dans le cas où le moteur fonctionne en générateur avec un courant maximum mais de signe opposé à celui du courant lors du fonctionnement normal en moteur.

A titre de comparaison, la Figure 9 représente la forme d'un signal impulsionnel de référence obtenu à partir d'un détecteur de position angulaire classique.

On peut observer que le dispositif selon l'invention de commande de moteur synchrone sans capteur déclenche une impulsion au passage à zéro (symbolisé par une petite flèche sur les diagrammes) du signal de flux sinusoïdal à chaque période de celui-ci et que la localisation de ces impulsions n'est pas affectée par la charge du moteur, puisque, quel que soit le courant dans le bobinage du stator 10 (Figure 6), que le fonctionnement soit en moteur (Figure 7) ou en générateur (Figure 8), le passage à zéro reste rigoureusement dans la même phase qu'une impulsion "top tour" de référence, qui serait obtenue par un capteur classique (Figure 9). L'information obtenue à partir des impulsions du dispositif selon l'invention (Figures 6 à 8) peut ainsi être considérée comme d'excellente qualité alors même qu'aucun capteur indépendant n'est utilisé et que seules sont exploitées les informations disponibles aux bornes 51 à 53 des phases du stator 10 du moteur.

**Revendications**

**1.** Dispositif de détection de la position angulaire pour le pilotage d'un moteur synchrone à excitation par aimant permanent comportant un rotor sans cage d'amortissement, un stator (10) muni d'un ensemble de bobinages (101,102,103), un convertisseur de fréquence (20) et des circuits (30) de contrôle du convertisseur de fréquence,

   **caractérisé en ce qu'**il comprend un circuit de calcul (40) comportant des moyens de mesure (41) pour déterminer la tension $V_u$ d'une phase donnée U, des moyens pour prélever au niveau de la sortie du convertisseur (20) ou aux bornes du stator (10) du moteur une information concernant l'intensité $i_u$ du courant dans le bobinage considéré ($R_m$, $L_m$), des premiers moyens soustracteurs (45) pour déduire de la tension $V_u$ déterminée par lesdits moyens de mesure (41) une grandeur (C1) correspondant à la chute de tension résistive sur la résistance ($R_m$) du bobinage considéré parcouru par un courant $i_u$, des moyens d'intégration (42) pour intégrer le signal issu des premiers moyens soustracteurs (45), des seconds moyens soustracteurs (47) pour déduire du signal issu des moyens d'intégration (42) une grandeur (C2) correspondant à la chute de tension inductive sur l'inductance ($L_m$) du bobinage considéré parcouru par le courant $i_u$, et un circuit comparateur (43) pour détecter les passages à zéro du signal sinusoïdal de flux rotorique issu des seconds moyens soustracteurs (47) et fournir ainsi un signal d'information repérant la position angulaire du rotor par rapport au stator (10).

**2.** Dispositif de détection selon la revendication 1, **caractérisé en ce que** le circuit de calcul (40) est réalisé essentiellement à l'aide d'un petit nombre d'amplificateurs opérationnels.

**3.** Dispositif de détection selon l'une quelconque des revendications 1 à 2, **caractérisé en ce que** les moyens d'intégration (42) comprennent un filtre du premier ordre avec une coupure d'environ 1 Hz.

**4.** Dispositif de détection selon l'une quelconque des revendications 1 à 3, **caractérisé en ce que** le circuit de calcul (40) permet de fournir une pluralité de signaux de sortie déphasés de 120 degrés.

**5.** Dispositif de pilotage d'un moteur synchrone à excitation par aimant permanent comportant un rotor sans cage d'amortissement et un stator (10) muni d'un ensemble de bobinages (101, 102, 103), lequel dispositif de pilotage comprend un convertisseur de fréquence (20) et des circuits (30) de contrôle du convertisseur de fréquence, **caractérisé en ce qu'**il comprend un dispositif de détection de la position angulaire du rotor par rapport au stator (10) selon l'une quelconque des revendications 1 à 4.

**6.** Dispositif de pilotage selon la revendication 5, **caractérisé en ce que** le circuit de calcul (40) du dispositif de détection de la position angulaire est intégré dans les circuits (30) de contrôle du convertisseur de fréquence (20).

**7.** Dispositif de pilotage selon l'une quelconque des revendications 5 et 6, **caractérisé en ce qu'**il comprend des moyens pour assurer une commande en boucle ouverte du convertisseur de fréquence au démarrage puis pour effectuer une commutation du pilotage en boucle ouverte au pilotage en boucle fermée quand ledit signal d'information de position angulaire du rotor est fourni de façon stable par ledit circuit de calcul (40).

**8.** Dispositif d'entraînement d'un ensemble tournant monté sur des paliers magnétiques actifs, **caractérisé en ce qu'**il comprend un moteur électrique équipé d'un dispositif de pilotage selon l'une quelconque des revendications 5 à 7,

**9.** Dispositif d'entraînement selon la revendication 8, **caractérisé en ce que** les paliers magnétiques actifs sont équipés d'un système de contrôle automatique de balourd et **en ce que** le signal d'information repérant la position angulaire du rotor du moteur électrique d'entraînement est appliqué également au système de contrôle automatique de balourd des paliers magnétiques actifs.

**10.** Dispositif d'entraînement selon l'une quelconque des revendications 8 et 9, **caractérisé en ce qu'**il comprend un moteur électrique d'entraînement d'une pompe turbomoléculaire, d'un compresseur ou d'une broche porte outil tournant à des vitesses de l'ordre de plusieurs dizaines de milliers de tours par minute.

**Patentansprüche**

**1.**  , Vorrichtung zum Erfassen der Winkelstellung zum Steuern eines dauermagnetisch erregten Synchronmotors, der einen Rotor ohne Dämpferkäfig, einen mit einer Spulenanordnung (101, 102, 103) ausgerüsteten Stator (10), einen Frequenzwandler (20) und Steuerschaltungen (30) des Frequenzwandlers aufweist,
   **dadurch gekennzeichnet, daß** sie eine Berechnungsschaltung (40) aufweist, welche enthält: eine Meßeinrichtung (42) zum Bestimmen der Spannung $V_u$ einer gegebenen Phase U, eine Einrichtung zum Abgreifen einer Information über die Stärke $i_u$ des Stroms in der betrachteten Spule ($R_m$, $L_m$) am Ausgang des Wandlers (20) oder an Anschlüssen des Stators (10), eine erste Subtrahiereinrichtung (45), mit der von der von der Meßeinrichtung (41) ermittelten Spannung $V_u$ eine Größe (C1) abgeleitet werden soll, die dem ohmschen Spannungsabfall an dem von einem Strom $i_u$ durchflossenen Widerstand ($R_m$) der betrachteten Spule entspricht, eine Integriereinrichtung (42) zum Integrieren des von der ersten Subtrahiereinrichtung (45) ausgegebenen Signals, eine zweite Subtrahiereinrichtung (47), um von dem von der Integriereinrichtung (52) ausgegebenen Signal eine Größe (C2) abzuleiten, die dem induktiven Spannungsabfall an der Induktivität ($L_m$) der von dem Strom $i_u$ durchflossenen betrachteten Spule entspricht, und eine Vergleicherschaltung (43) zum Erfassen der Nulldurchgänge des sinusförmigen Rotorfluß-Signals, das von der zweiten Subtrahiereinrichtung (47) ausgegeben wird, um damit ein Informationssignal zu liefern, welches die Winkelstellung des Rotors bezüglich des Stators (10) angibt.

2. Vorrichtung nach Anspruch 1,
   **dadurch gekennzeichnet, daß** die Berechnungsschaltung (40) im wesentlichen mit Hilfe einer geringen Anzahl von Operationsverstärkern realisiert ist.

3. Vorrichtung nach einem der Ansprüche 1 bis 2,
   **dadurch gekennzeichnet, daß** die Integrationseinrichtung (42) ein Filter erster Ordnung mit einer Grenzfrequenz von etwa 1 Hz aufweist.

4. Vorrichtung nach einem der Ansprüche 1 bis 3,
   **dadurch gekennzeichnet, daß** die Berechnungsschaltung (40) die Abgabe mehrerer Ausgangssignale ermöglicht, die in ihrer Phase um 120 Grad versetzt sind.

5. Steuervorrichtung für einen Synchronmotor mit dauermagnetischer Erregung und einem Rotor ohne Dämpferkäfig sowie einem Stator (10), der mit einer Anordnung von Spulen (101, 102, 103) ausgestattet ist, wobei die Steuervorrichtung einen Frequenzwandler (20) und Schaltungen (30) zum Steuern des Frequenzwandlers aufweist,
   **dadurch gekennzeichnet, daß** sie einen Winkelstellungsdetektor zum Erfassen der Rotorstellung bezüglich des Stators (10) gemäß einem der Ansprüche 1 bis 4 aufweist.

6. Vorrichtung nach Anspruch 5,
   **dadurch gekennzeichnet, daß** die Berechnungsschaltung der Erfassungsvorrichtung für die Winkelstellung in die Schaltungen (30) zum Steuern des Frequenzwandlers (20) integriert ist.

7. Vorrichtung nach einem der Ansprüche 5 und 6,
   **dadurch gekennzeichnet, daß** sie eine Einrichtung zur Offenschleifen-Steuerung des Frequenzwandlers für den Anlaufvorgang aufweist, um eine Umschaltung von der Offenschleifen-Steuerung zur Schleifenregelung vorzunehmen, wenn das Informationssignal über die Winkelstellung des Rotors von der Berechnungsschaltung (40) in stabiler Weise bereitgestellt wird.

8. Antriebsvorrichtung für eine drehende Anordnung, die auf aktiven Magnetlagern gelagert ist,
   **dadurch gekennzeichnet, daß** sie einen Elektromotor aufweist, der mit einer Steuervorrichtung nach einem der Ansprüche 5 bis 7 ausgestattet ist.

9. Vorrichtung nach Anspruch 8,
   **dadurch gekennzeichnet, daß** die aktiven Magnetlager mit einem automatischen Unwucht-Ausgleichssystem ausgestattet sind, und die Signalinformation bezüglich der Winkelstellung des Rotors des elektrischen Antriebsmotors auch angewendet wird bei dem automatischen Umwucht-Ausgleichssystem für die aktiven Magnetlager.

10. Antriebsvorrichtung nach Anspruch 8 und 9,
    **dadurch gekennzeichnet, daß** sie einen elektrischen Antriebsmotor einer Turbomolekularpumpe, eines Kompressors oder einer Werkzeughaltespindel aufweist, die mit Drehzahlen von mehreren zehntausend Umdrehungen pro Minute umlaufen.

**Claims**

1. An angular position detector device for controlling a synchronous motor with permanent magnet excitation, the motor having a rotor without a damping cage, a stator (10) provided with a set of windings (101, 102, 103), a frequency converter (20), and circuits (30) for controlling the frequency converter,
   the device being **characterised in that** it comprises a calculation circuit (40) having measurement means (41) for determining the voltage $V_u$ of a given phase U, means for taking information concerning the magnitude of the current $i_u$ carried by the winding under consideration ($R_m$, $L_m$) from the outlet of the converter (20) or from the stator terminals (10) of the motor, first subtracter means (45) for subtracting from the voltage $V_u$ as determined by said measurement means (41), a magnitude (C1) corresponding to the resistive voltage drop across the resistance ($R_m$) of the winding under consideration carrying a current $i_u$, integrator means (42) for integrating the signal from the first subtracter means (45), second subtracter means (47) for subtracting from the signal delivered by the integrator means (42) a magnitude (C2) corresponding to the inductive voltage drop across the inductance ($L_m$) of the winding under consideration carrying the current $i_u$, and a comparator circuit (43) for detecting the zero crossings of the rotor flux sinewave signal delivered by the second subtracter means (47), thereby delivering an information signal identifying the angular position of the rotor relative to the stator (10).

2. A detector device according to claim 1, **character-**

**ised in that** the calculation circuit (40) is essentially made from a small number of operational amplifiers.

3. A detector device according to claim 1 or 2, **characterised in that** the integrator means (42) comprise a first order filter with a cutoff of about 1 Hz.

4. A detector device according to any one of claims 1 to 3, **characterised in that** the calculation circuit (40) enables a plurality of output signals to be delivered that are at phase offsets of 120 degrees.

5. A device for controlling a synchronous motor with permanent magnet excitation, the motor having a rotor without a damping cage and a stator (10) provided with a set of windings (101, 102, 103), which controller device comprises a frequency converter (20) and circuits (30) for controlling the frequency converter, **characterised in that** it comprises a detector device for detecting the angular position of the rotor relative to the stator (10) according to any one of claims 1 to 4.

6. A controller device according to claim 5, **characterised in that** the calculation circuit (40) of the angular position detector device is integrated in the circuits (30) for controlling the frequency converter (20).

7. A controller device according to claim 5 or 6, **characterised in that** it includes means for providing open loop control of the frequency converter on starting, and then for switching over from open loop control to closed loop control when said signal providing information about the angular position of the rotor is provided in stable manner by said calculation circuit (40).

8. A device for driving a rotary assembly mounted on active magnetic bearings, **characterised in that** it comprises an electric motor fitted with a controller device according to any one of claims 5 to 7.

9. A driver device according to claim 8, **characterised in that** the active magnetic bearings are fitted with an automatic unbalance control system, and **in that** the information signal identifying the angular position of the rotor of the driving electric motor is likewise applied to the automatic unbalance control system of the active magnetic bearings.

10. A driver device according to claim 8 or 9, **characterised in that** it comprises an electric motor for driving a molecular drag pump, a compressor, or a tool-carrying spindle rotating at speeds of the order of tens of thousands of revolutions per minute.

# FIG.1

EP 0 925 641 B1

FIG.2

FIG.3

FIG.4

FIG.5

FIG.6

FIG.7

FIG.8

FIG.9